# EUROPÄISCHE PATENTSCHRIFT

(11) **EP 0 702 231 B1**
(45) Veröffentlichungstag und Bekanntmachung des Hinweises auf die Patenterteilung: **04.06.2003**
(21) Anmeldenummer: 95114106.8
(22) Anmeldetag: 08.09.1995
(51) Int. Cl.: G01N 30/56, G01N 30/60, B01D 15/08

(54) **Verfahren zum Packen von Chromatographiesäulen**
Process for packing chromatography columns
Procédé pour remplir des colonnes de chromatographie

(30) Priorität: 15.09.1994 DE 4432887
(43) Veröffentlichungstag der Anmeldung: 20.03.1996
(73) Patentinhaber: Aventis Pharma Deutschland GmbH, 65929 Frankfurt am Main (DE)
(72) Erfinder: Unger, Bernhard, Dr., D-65527 Niedernhausen (DE); Dickhardt, Rainer, Dr., D-65779 Kelkheim (DE)

(56) Entgegenhaltungen:
- EP-A- 0 049 850
- EP-A- 0 515 955
- DD-A- 233 491
- PATENT ABSTRACTS OF JAPAN vol. 11, no. 181 (P-585) (2628) 11. Juni 1987 & JP-A-62 011 161 (KURITA WATER IND LTD) 20. Januar 1987

## Beschreibung

Die Erfindung bezieht sich auf ein Verfahren zur Herstellung einer Chromatographiepackung.

Bekannte Verfahren zum Packen von Chromatographiesäulen beinhalten das Einfüllen von in Suspension vorliegenden rigiden oder weichen Sorbentien mit anschließendem Komprimieren der Sorbentien mit Hilfe eines konstanten Volumenstroms des Packmediums (Pharmacia LKB Biotechnology, Bioprocess® Glass columns, Nr. 60-01-063 (1989)). Ein weiteres Verfahren besteht darin, daß das eingefüllte Chromatographiematerial durch Belasten eines beweglichen Kolbens axial komprimiert und verfestigt wird (EP 0 049 850). Eine weitere Patentanmeldung EP-A 0 515 955) betrifft ein Verfahren zur Naßbefüllung von Chromatographiesäulen, wobei das Sorbensmaterial, in einem Eluenten suspendiert, kontinuierlich in die Säule eingebracht und durch eine Druckfiltration verdichtet wird. Nachteile der bekannten Verfahren sind:
die genaue Abstimmung von Lösemittel oder Lösemittelgemischen mit dem zu packenden Sorbens (nicht jedes Sorbens kann mit einem beliebigen Lösemittel suspendiert und verdichtet werden);
die exakte Volumen/Gewichtsrelation von Lösemittel und Sorbens zum Erstellen einer definierten Packhöhe (die Packhöhe korreliert mit dem Sorbenseinsatz und muß vorher in zahlreichen Versuchen genau festgelegt werden);
die auftretenden Emissionen bei Verwendung toxischer organischer Lösemittel, die häufig offen gehandhabt werden müssen;
die teilweise sehr aufwendigen Montagearbeiten vor oder nach dem Packprozeß;
die großen hydraulischen Pumpleistungen, die zur Verdichtung von rigiden Sorbentien notwendig sind;
die Bauhöhe der Apparatur.

Hier will die Erfindung Abhilfe schaffen. Die Erfindung, wie sie In den Ansprüchen gekennzeichnet ist, löst die Aufgabe durch ein Verfahren zur Herstellung einer Chromatographiepackung (3), wobei man ein flüssiges Packmedium kontinuierlich in eine Chromatographiesäule (1) leitet, wobei die Chromatographiesäule oben durch einen Kolben (2) und unten durch ein Anschlußstück (4) abgeschlossen wird und im oberen Teil der Chromatographiesäule eine oder mehrere seitliche Öffnungen (5) vorhanden sind, wobei man die Zuleitung des genannten Packmediums durch den Kolben und eine oder mehrere seitliche Öffnungen durchführt, das Chromatographiematerial mit dem genannten Packmedium durch eine oder mehrere seitliche Öffnungen in die Chromatographiesäule leitet und das Packmedium durch das genannte Anschlußstück ableitet, dadurch gekennzeichnet, daß von 10 % bis 40 % des Packmediums über den Kolben und von 90 % bis 60 % über eine oder mehrere seitliche Öffnungen in die Chromatographiesäule geleitet wird.

Das Packen der Chromatographiesäule wird durch Filtration erreicht. Dabei durchströmt ein Packmedium - in der Regel die Suspendierflüssigkeit für das Chromatographiematerial (Sorbens) - die mit Packmedium vollständig gefüllte Chromatographiesäule. Der Kolben befindet sich dabei oberhalb der seitlichen Öffnung(en). Das Packmedium verläßt dabei die Chromatographiesäule über das Anschlußstück und kann über eine Leitung wieder in den Behälter für das Packmedium und dann in die Chromatographiesäule geleitet werden oder wird in ein Auffanggefäß geleitet. Das Packmedium kann gleichzeitig durch den feststehenden oder beweglichen Kolben und die seitlichen Öffnungen in die Chromatographiesäule strömen. Der Gesamtvolumenstrom des Packmediums verteilt sich auf den Kolben und die seitlichen Öffnungen von 10: 90 bis 40 : 60, vorzugsweise von 20 : 80 bis 30 : 70, insbesondere 25 : 75.

Die Zufuhr des Chromatographiematerials erfolgt nur über die seitlichen Öffnungen. Die Zufuhrgeschwindigkeit des Chromatographiematerials ist variabel und hängt von der Konzentration des suspendierten Materials und der Pumpleistung der Pumpe ab. Nach Sedimentation einer geringen Sorbensmenge auf der Bodenfritte der Chromatographiesäule (ist Teil des Anschlußstücks) baut sich ein Gegendruck innerhalb der Säule auf, der für eine optimale Verdichtung der Chromatographiepackung sorgt. Dieser Druck bleibt über den gesamten Packvorgang bestehen und hängt von der Packhöhe sowie vom Volumenfluß ab. Durch eine druckabhängige Regelung der Fördermenge der Kreislaufpumpe, kann der Druck immer auf einem bestimmten Niveau gehalten werden, bis die gesamte Sorbenssuspension in die Säule gefüllt ist. Die Packhöhe kann durch die Menge an suspendiertem Sorbens bestimmt und während des Packvorgangs den Erfordernissen angepaßt werden.

Die durch die Erfindung erreichten Vorteile sind im wesentlichen darin zu sehen, daß die Chromatograhiepackung, abgesehen von einer kurzen Anlaufphase, in der zuerst ein Sediment auf der Bodenfritte der Säule aufgebaut werden muß immer unter gleichem Filtrationsdruck hergestellt wird;
infolge des Druckgefälles in der Chromatographiepackung sich eine plane Oberfläche während des Filtrationsvorganges einstellt und
die Dichteverteilung der Chromatographiepackung homogen ist.

Weitere Vorteile bei diesem Packverfahren ergeben sich in der relativ kurzen Säulenkonstruktion, der emissionsfreien Arbeitsweise, der Möglichkeit zur Automatisierung des Vorgangs und der Vermeidung von Montagearbeiten, während oder nach dem Packen, die bei groß dimensionierten Systemen sehr aufwendig sind. Ferner können ohnehin vorhandene Einrichtungen wie die für die Chromatographie notwendige Elutionspumpe in den Packvorgang mit einbezogen werden.

Nach dem Packen wird der Kolben auf die Chromatographiepackung unterhalb der seitlichen Säulenöffnungen abgesenkt, wobei die überstehende Suspendierflüssigkeit entweder durch die Chromatographiepackung gedrückt wird oder über die Fritte im Kolben aus der Chromatographiesäule austritt. Die seitlichen Öffnungen sind während der Chromatographie verschlossen.

Die einsetzbaren Chromatographiesäulen sind beispielsweise zylinderförmige Säulen mit rundem oder ovalen Querschnitt; das Material der Säulen ist beispielsweise Glas, Kunststoff oder Stahl.

Der Kolben enthält Einrichtungen zur Befestigung der Zuleitung aus dem Behälter mit Packmedium, Dichtungen, Filter, beispielsweise eine Sinterplatte oder Netzfritte. Als Material sind Stahl oder Kunststoffe wie Polypropylen oder Fluorethenpropen geeignet. Die Chromatographiepackung besteht aus den für Chromatographieprozesse geeigneten Materialien, beispielsweise Silikagel, Agarose, Polyacrylamid, Hydroxylapatit, Diethylaminoethyl oder Cellulose.

Als Packmedium kommen alle in der Flüssigchromatographie bekannten Flüssigkeiten wie Wasser, Puffer oder organische Lösungsmittel in Frage. Die seitlichen Öffnungen befinden sich im oberen Teil der Chromatographiesäule. Die Anzahl der Öffnungen hängt von dem Durchmesser der Säule ab. Bei einem Durchmesser der Säule von 30 cm haben sich 3 bis 6 Öffnungen bewährt. Der Durchmesser der seitlichen Öffnungen entspricht dem Durchmesser der Zuleitungen. Die Öffnungen können während der Chromatographie verschlossen werden.

Das Anschlußstück schließt die Chromatographiesäule nach unten ab, es enthält ein planes Filterelement, z. B. eine Sinterplatte, auf der das Sorbensmaterial sedimentiert, eine Abschlußöffnung zum Anschluß von Leitungen sowie gegebenenfalls weitere Halterungen für die Chromatographiesäule.

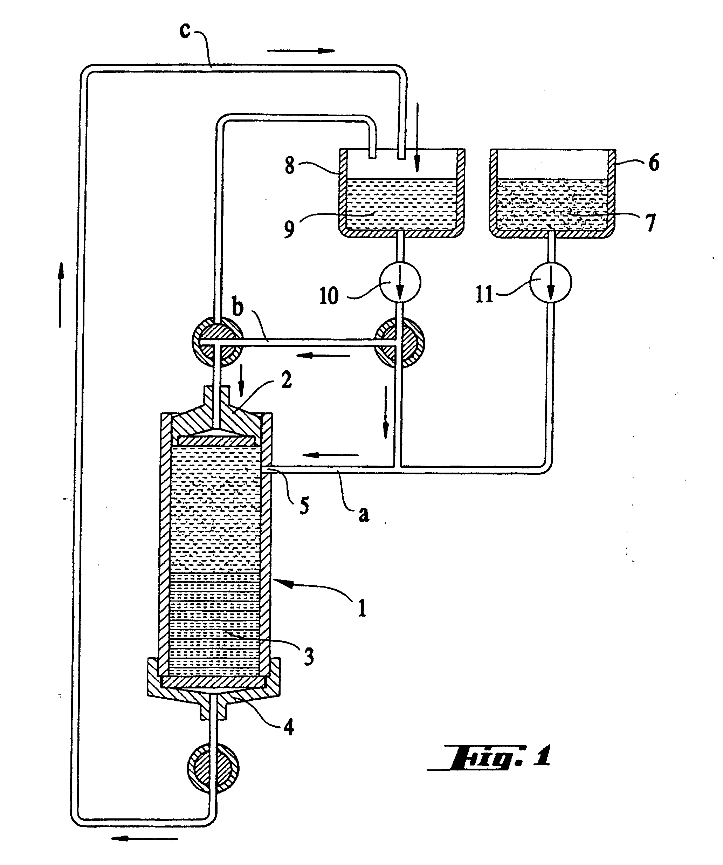

Eine besondere Ausführungsform ist die in Fig. 1 dargestellte Vorrichtung, gekennzeichnet durch eine Chromatographiesäule (1) (siehe Fig. 1), die oben durch einen Kolben (2) und unten durch ein Anschlußstück (4) abgeschlossen wird und im oberen Teil eine oder mehrere seitliche Öffnungen (5) hat, einen Behälter (6), enthaltend suspendiertes Sorbensmaterial (7), der über die Leitung (a) mit einer oder mehreren der seitlichen Öffnungen (5) verbunden ist, und einen Behälter (8), enthaltend Packmedium (9), der über die Leitung (a) mit einer oder mehreren der seitlichen Öffnungen (5) verbunden ist und der über die Leitung (b) mit dem Kolben (2) verbunden ist.

Die Erfindung betrifft ferner die Verwendung einer Vorrichtung zum Packen einer Chromatographiesäule in einem Verfahren zur Herstellung einer Chromatographiepackung (3), wobei man ein flüssiges Packmedium kontinuierlich in eine Chromatographiesäule (1) leitet, wobei die Chromatographiesäule oben durch einen Kolben (2) und unten durch ein Anschlußstück (4) abgeschlossen wird und im oberen Teil der Chromato-graphiesäule eine oder mehrere seitliche Öffnungen (5) vorhanden sind, die Zuleitung des genannten Packmediums durch den Kolben und eine oder mehrere seitliche Öffnungen durchgeführt wird, das Chromatographiematerial mit dem genannten Packmedium durch eine oder mehrere seitliche Öffnungen in die Chromatographiesäule leitet und das Packmedium durch das genannte Anschlußstück ableitet, dadurch gekennzeichnet, daß von 10 % bis 40 % des Packmediums über den Kolben und von 90 % bis 60 % über eine oder mehrere seitliche Öffnungen in die Chromatographiesäule geleitet wird.

Die Erfindung betrifft auch die Verwendung einer Vorrichtung zur Druckchromatographie, gekennzeichnet durch eine Chromatographiesäule (1), die oben durch einen Kolben (2) und unten durch ein Anschlußstück (4) abgeschlossen wird, eine Chromatographiepackung (3), erhältlich durch das erfindungsgemäße Verfahren zur Herstellung einer Chromatographiepackung und die oberhalb der genannten Chromatographiepackung eine oder mehrere seitliche Öffnungen (5) aufweist. Die Erfindung betrifft auch eine Chromatographiepackung (3), erhältlich durch das erfindungsgemäße Verfahren.

### Figurenlegende:

- Fig. 1: Erfindungsgemäße Chromatographiesäule mit direktem Zufluß des Packmittels auf die Säule
- Fig. 2: Erfindungsgemäße Chromatographiesäule ohne direkten Zufluß des Packmittels auf die Säule

Im folgenden wird die Erfindung anhand von Beispielen näher erläutert:

### Beispiel 1

### Vorbereiten der Chromatographiesäule zum Packen

Als erstes wird eine gereinigte Bodenfritte mit dem entsprechenden neuen O-Ring versehen und auf das von der Säule entfernte Anschlußstück (4) montiert. Anschließend wird eine Fritte auf dem aus der Säule entfernten Säulenstempel (2) befestigt. Danach wird der Säulenstempel bis oberhalb der seitlichen Säulenöffnungen (5) gefahren. Zum Verschließen der Säule wird das untere Anschlußstück (4) mit Schrauben an das Säulenrohr fest angepaßt.

### Packen der Chromatographiesäule

Um die Säule (Durchmesser 30 cm, Höhe 1 m) packen zu können werden in die Packmittelvorlage (8) 300 bis 500 I n-Propanol (Packmedium (9)) vorgelegt.

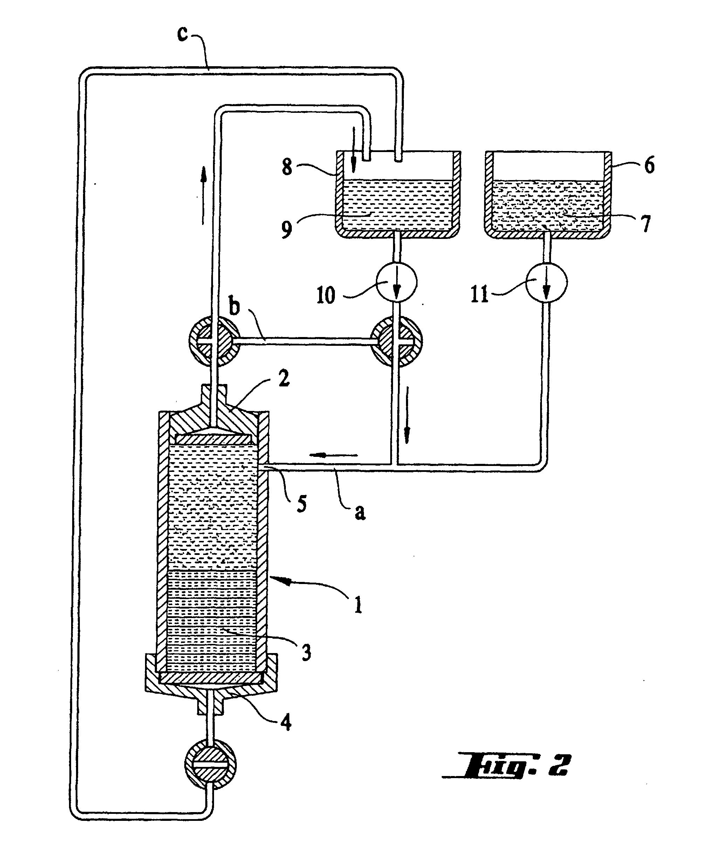

Dann wird die Chromatographiesäule (1) aus der Packmittelvorlage (8) mit 100 %igem n-Propanol mit der Pumpe (10) bei geschlossenem Säulenausgang geflutet (Fig. 2). Dies geschieht, um die Luft im Säulenrohr durch die Stempelfritte in ein Auffanggefäß zu verdrängen. Sobald am angeschlossenen Schlauch ein gleichmäßiger Fluß von n-Propanol festgestellt wird, ist die Packpumpe auszuschalten.

Anschließend wird in dem Behälter (6) 100 I n-Propanol vorgelegt, und unter Rühren 12,5 - 13,5 kg Reverse-Phase-Kieselgel (RP-Kieselgel; z. B. Kromasil C-8) eingetragen und anschließend 14-16 Minuten suspendiert.

Nach dem Öffnen des Säulenausgangs pumpt die Packpumpe (10) das Packmedium (9) über die drei seitlichen Säulenöffnungen (5) (in Fig. 1 ist nur eine dargestellt), sowie durch die Stempelfritte (2) in die Chromatographiesäule (1), durch die Bodenfritte (4) und die Leitung (c) im Kreislauf.

In diesem Lösemittelkreislauf wird mit Hilfe der Pumpe (11) das suspendierte RP-Kieselgel (7) langsam zudosiert. Über die Packleitung (a) wird das Gemisch aus Kieselgel und n-Propanol in die Chromatographiesäule (1) geleitet.

Dort baut sich langsam ein Gelbett auf und der Druck in der Säule steigt bis auf maximal 85 bar an. Durch kontinuierliche Verringerung des Kreislaufvolumenstromes wird der Druck in der Säule während des Anwachsens des Gelbettes konstant gehalten. Das Konstanthalten des Druckabfalls bewirkt einen gleichmäßigen Aufbau der Chromatographiepackung (3). Die Zudosierung des suspendierten Kieselgels erfolgt solange bis die gewünschte Gelbetthöhe erreicht ist, oder die gesamte Kieselgelsuspension in die Säule gepumpt ist. Zum Schluß wird die Chromatographiepackung für weitere 30 - 35 Minuten mittels der Packpumpe (10) komprimiert, indem n-Propanol durchgepumpt wird. Danach wird die Packpumpe (10) abgestellt und die seitlichen Öffnungen (5) geschlossen. Abschließend wird der Säulenstempel (2) bis auf die Geloberfläche nach unten gefahren.

### Beispiel 2

### Qualitätsbestimmung der Säulenpackung

Es werden 7,5 ml Phenol/Kresol-Testgemisch und 40 ml Aceton in 100 ml Methanol/Wassergemisch (Verhältnis 1 : 3) gelöst. Diese Lösung wird auf die Chromatographiesäule aus Beispiel 1 gepumpt und dann isokratisch mit einem n-Propanol/Wassergemisch eluiert. Auf dem Elutiondiagramm ergeben sich drei Peaks, aus denen die Trennleistung und die Bodenzahl der Säulenpackung berechnet werden kann.

## Patentansprüche

1. Verfahren zur Herstellung einer Chromatographiepackung (3), wobei man ein flüssiges Packmedium kontinuierlich in eine Chromatographiesäule (1) leitet, wobei die Chromatographiesäule oben durch einen Kolben (2) und unten durch ein Anschlußstück (4) abgeschlossen wird und im oberen Teil der Chromatographiesäule eine oder mehrere seitliche Öffnungen (5) vorhanden sind, wobei man die Zuleitung des genannten Packmediums durch den Kolben und eine oder mehrere seitliche Öffnungen durchführt, das Chromatographiematerial mit dem genannten Packmedium durch eine oder mehrere seitliche Öffnungen in die Chromatographiesäule leitet und das Packmedium durch das genannte Anschlußstück ableitet, **dadurch gekennzeichnet, daß** von 10 % bis 40 % des Packmediums über den Kolben und von 90 % bis 60 % über eine oder mehrere seitliche Öffnungen in die Chromatographiesäule geleitet wird.

2. Verfahren gemäß Anspruch 1, **dadurch gekennzeichnet, daß** von 20 % bis 30 % des Packmediums über den Kolben und von 70 % bis 80 % über eine oder mehrere seitliche Öffnungen in die Chromatographiesäule geleitet wird.

3. Verfahren gemäß Anspruch 1, **dadurch gekennzeichnet, daß** 25 % des Packmediums über den Kolben und 75 % über eine oder mehrere seitliche Öffnungen in die Chromatographiesäule geleitet wird.

4. Verfahren gemäß einem oder mehreren der Ansprüche 1 bis 3, **dadurch gekennzeichnet, daß** das benutzte Packmedium im Kreislauf durch die Chromatographiesäule geleitet wird.

5. Verfahren gemäß Anspruch 1 bis 4, **dadurch gekennzeichnet, daß** der Druck, mit der das Packmedium in die Chromatographiesäule geleitet wird, konstant ist.

## Claims

1. A method for producing chromatography packing (3), in which a liquid packing medium is fed continuously into a chromatography column (1), the chromatography column being closed off at the top by a plunger (2) and, at the bottom, by a connection piece (4) and one or more lateral openings (5) being present in the upper part of the chromatography column, supply of said packing medium taking place through the plunger and one or more lateral openings, the chromatography material being fed, with said packing medium, into the chromatography column via one or more lateral openings and the packing medium being discharged through said connection piece, wherein from 10 % to 40 % of the packing medium is fed via the plunger and from 90 % to 60 % is fed via one or more lateral openings into the chromatography column.

2. The method as claimed in claim 1, wherein from 20% to 30% of the packing medium is fed via the plunger and from 70% to 80% is fed via one or more lateral openings into the chromatography column.

3. The method as claimed in claim 1, wherein 25% of the packing medium is fed via the plunger and 75% is fed via one or more lateral openings into the chromatography column.

4. The method as claimed in one or more of claims 1 to 3, wherein the packing medium used is fed in a circuit through the chromatography column.

5. The method as claimed in claims 1 to 4, wherein the pressure at which the packing medium is fed into the chromatography column is constant, wherein from 10 % to 40 % of the packing medium is fed via the plunger and from 90 % to 60 % is fed via one or more lateral openings into the chromatography column.

## Revendications

1. Procédé pour la préparation d'un garnissage de chromatographie (3), dans lequel on charge un milieu de garnissage en continu dans une colonne de chromatographie (1), dans lequel la colonne de chromatographie est terminée en haut par un piston (2) et en bas par une pièce de raccordement (4) et dans la partie supérieure de la colonne de chromatographie sont présentes une ou plusieurs ouvertures latérales (5), dans lequel on fait passer la conduite d'alimentation du milieu de garnissage mentionné à travers le piston et une ou plusieurs ouvertures latérales, on charge le matériau de chromatographie dans la colonne de chromatographie avec le milieu de garnissage mentionné à travers une ou plusieurs ouvertures latérales et on évacue le milieu de garnissage à travers la pièce de raccordement mentionnée, **caractérisé en ce que** de 10 % à 40 % du milieu de garnissage est chargé dans la colonne de chromatographie via le piston et de 90 % à 60 % via une ou plusieurs ouvertures latérales.

2. Procédé selon la revendication 1, **caractérisé en ce que** de 20 % à 30 % du milieu de garnissage est chargé dans la colonne de chromatographie via le piston et de 70 % à 80% via une ou plusieurs ouvertures latérales.

3. Procédé selon la revendication 1, **caractérisé en ce que** 25 % du milieu de garnissage est chargé dans la colonne de chromatographie via le piston et 75% via une ou plusieurs ouvertures latérales.

4. Procédé selon une ou plusieurs des revendications 1 à 3, **caractérisé en ce que** le milieu de garnissage utilisé est chargé en boucle fermée à travers la colonne de chromatographie.

5. Procédé selon les revendications 1 à 4, **caractérisé en ce que** la pression, avec laquelle le milieu de garnissage est chargé dans la colonne de chromatographie, est constante.
